**Europäisches Patentamt**

**European Patent Office**

**Office européen des brevets**

(19)

(11) Numéro de publication : **0 493 226 B1**

## (12) FASCICULE DE BREVET EUROPEEN

(45) Date de publication du fascicule du brevet :
**06.09.95 Bulletin 95/36**

(51) Int. Cl.⁶ : **H02J 7/10**

(21) Numéro de dépôt : **91403492.1**

(22) Date de dépôt : **20.12.91**

(54) **Procédé et dispositif pour charger un accumulateur.**

(30) Priorité : **21.12.90 FR 9016145**

(43) Date de publication de la demande :
**01.07.92 Bulletin 92/27**

(45) Mention de la délivrance du brevet :
**06.09.95 Bulletin 95/36**

(84) Etats contractants désignés :
**AT BE CH DE DK ES FR GB IT LI NL SE**

(56) Documents cités :
**EP-A- 0 005 841**
**EP-A- 0 368 353**
**WO-A-89/08940**
**DE-A- 3 832 840**

(56) Documents cités :
**US-A- 4 052 656**
**US-A- 4 433 277**
**US-A- 4 742 290**
**US-A- 4 876 495**

(73) Titulaire : **SOCIETE GENERALE DE TRAVAUX ELECTRIQUES**
**44, boulevard de Champigny**
**F-94210 La Varenne Saint Hilaire (FR)**

(72) Inventeur : **Kazdaghli, Abdessatar**
**28 rue de Reims**
**F-92160 Antony (FR)**

(74) Mandataire : **Derambure, Christian**
**Cabinet Bouju Derambure (Bugnion) S.A.,**
**52, rue de Monceau**
**F-75008 Paris (FR)**

EP 0 493 226 B1

## Description

L'invention concerne un procédé et un dispositif pour charger un accumulateur, c'est-à-dire un générateur électrochimique rechargeable, par exemple une batterie d'accumulateur telle qu'une batterie de traction destinée à alimenter en énergie électrique un véhicule électrique tel qu'un chariot de manutention.

Pour charger correctement un accumulateur, le problème principal qui se pose est celui de savoir à quel moment exact la charge doit être interrompue. En effet, si la charge est interrompue trop tôt, il persiste une hétérogénéité dans l'électrolyte qui entraîne une hétérogénéité de fonctionnement des électrodes et un vieillissement accéléré de la partie basse des électrodes. Il est donc toujours nécessaire de réaliser un complément de charge, c'est-à-dire de charger l'accumulateur d'une quantité en ampères-heures légèrement supérieure à la quantité d'ampères-heures de laquelle l'accumulateur était déchargé exprimée par la profondeur de décharge qui est le rapport entre cette quantité d'ampères-heures déchargée sur la capacité nominale de l'accumulateur.

Au contraire, si on poursuit trop longtemps le complément de charge, l'accumulateur subit une surcharge qui conduit à une corrosion de la grille d'électrode positive, à une destruction des matériaux de l'accumulateur du fait du dégagement gazeux provoqué par la surcharge, et à un échauffement de l'accumulateur qui catalyse ces deux phénomènes.

Il existe actuellement deux types de procédé et de dispositif de charge d'accumulateur.

Dans le premier type de procédé et de dispositif de charge connus, on se contente de rajouter un complément de charge correspondant à un temps de charge déterminé et invariable à partir du moment où la tension U aux bornes de l'accumulateur arrive à une valeur prédéterminée, par exemple de l'ordre de 2,4 V par élément qui est présumée être atteinte au temps où le coefficient de charge est de l'ordre de 1. Ce critère pour déterminer le complément de charge généralement dénommé "critère horovoltmétrique", a l'avantage d'une grande simplicité et de pouvoir être mis en application avec des dispositifs chargeurs non régulés en courant de charge. Pendant la durée du complément de charge, on impose une valeur au courant I de charge grâce à une inductance de valeur déterminée. Mais ce critère horovoltmétrique s'avère en pratique être largement insuffisant pour assurer une charge correcte des accumulateurs dont les caractéristiques peuvent varier considérablement. Ainsi, la tension de seuil prédéterminée devrait normalement dépendre de l'âge de l'accumulateur et de la température à laquelle il se trouve lorsqu'on le charge. De plus, imposer un complément de charge d'une durée fixe revient à imposer une loi hyperbolique pour la variation du coefficient de charge (rapport de la quantité d'ampères-heures rechargée sur la quantité d'ampères-heures initialement déchargée de l'accumulateur) en fonction de la profondeur de décharge. De ce fait, le coefficient de charge devient insuffisant pour des accumulateurs ayant subis une profondeur de décharge importante, notamment supérieure à 80 %. De plus, le fait de ne pas contrôler le courant de fin de charge introduit une erreur supplémentaire qui amplifie les effets néfastes dûs à l'âge de l'accumulateur et à sa température en imposant une surcharge trop importante si l'accumulateur est âgé et/ou chaud, et ce même pour des profondeurs de décharge importantes -notamment de l'ordre de 80 %-. Il est donc nécessaire en pratique de prévoir des minuteries de sécurité qui limitent la durée totale de la charge quel que soit le moment où la tension de seuil est détectée. En tout état de cause, il est impossible avec ce critère horovoltmétrique simplifié de tenir compte pour le complément de charge de l'âge, de la température, et de la profondeur de décharge de l'accumulateur. Ainsi, pour des profondeurs de décharge faibles, ce critère horovoltmétrique induit des surcharges pouvant détériorer l'accumulateur ou accélérer son vieillissement.

Dans le deuxième type de procédé et de dispositif connu, on calcule la valeur de la fonction dérivée dU/dt de la fonction représentant la tension U en fonction du temps t, et on interrompt la charge lorsque cette dérivée prend une valeur inférieure à une valeur de seuil prédéterminée. Ce critère généralement dénommé "critère dU/dt" ou "critère dV/dt" permet d'adapter le coefficient de charge à la profondeur de décharge de façon convenable. Mais il ne peut être mis en oeuvre que dans les dispositifs chargeurs régulés en courant. De plus, les moyens de mesure de la valeur de la tension U aux bornes de l'accumulateur et du calcul de sa dérivée doivent être extrêmement performants car la valeur de seuil et les valeurs mesurées à la fin de la charge pour la dérivée dU/dt sont très faibles. En effet, la courbe représentant la tension U en fonction du temps t est pratiquement horizontale à la fin de la charge. De plus, ce critère dU/dt ne prend pas en compte l'âge de l'accumulateur et sa température. Or il s'avère en pratique que la valeur de la dérivée dU/dt dépend de façon sensible de l'âge de l'accumulateur et de la température.

Par ailleurs, il n'est pas possible en pratique de fixer la fin de la charge uniquement sur un critère fondé sur la valeur de la tension U aux bornes de l'accumulateur en fin de charge. En effet, cette tension U en fin de charge varie d'un accumulateur à l'autre, notamment selon l'âge de l'accumulateur. Ainsi, si un tel critère était retenu, cela entraînerait une charge différente selon que la batterie est neuve ou ancienne. Il en va de même également selon que la température de l'accumulateur est haute ou basse. Ainsi, un accumulateur froid serait insuffisamment chargé et un accumulateur chaud pourrait être surchargé, le seuil de tension de fin de charge n'étant pas détecté.

Egalement, il n'est pas possible d'adopter un coefficient de charge constant valable pour tous les types d'accumulateur. En effet, comme on l'a indiqué ci-dessus, la charge totale à fournir à un accumulateur et le complément de charge à apporter (après avoir atteint la valeur 1 pour le coefficient de charge) dépendent essentiellement de la profondeur de décharge, de l'âge de l'accumulateur, et de sa température.

En réalité, le seul véritable critère qui permettrait de déterminer de façon sûre et fiable la charge totale à appliquer à un accumulateur, et donc précisément le temps auquel la charge doit être interrompue, serait un critère du type électrochimique qui consisterait à mesurer la densité de l'électrolyte sur toute la hauteur de l'accumulateur et à comparer les valeurs mesurées à la valeur nominale de l'accumulateur. Mais, il est bien évident qu'un tel critère électrochimique ne peut pas être mis en oeuvre par un dispositif de charge de type électrique.

Le document EP-A-0 005 841 décrit un procédé pour charger un accumulateur où le courant, la tension et le temps de charge sont mesurés en permanence. On détermine en permanence la valeur de la dérivée de la tension et on mémorise ces grandeurs dans des moyens de mémorisation permanente de valeurs instantanées. On détecte la valeur maximale de la pente de la courbe de tension, on calcule la charge additionnelle devant être appliquée à l'accumulateur après la détection de la valeur détectée maximale de la pente, et on arrête de charger l'accumulateur lorsque la charge appliquée atteint la valeur de la charge additionnelle calculée en fonction du type de l'accumulateur.

Le document US-A-4 052 656 propose de détecter le point d'inflexion de la tension pour déterminer le montant de la charge additionnelle à appliquer. Pour ce faire, on détermine approximativement la valeur de la charge fournie à l'accumulateur pendant les phases de charge rapide et d'en déduire la durée de cette charge additionnelle.

Le document US-A-4 433 277 suggère de détecter, quand un seuil de tension est atteint, l'instant où l'accumulateur est chargée à un niveau prédéterminé. Le temps de surcharge est choisi pour obtenir un montant de la surcharge prédéterminé.

Le document DE-A-3 832 840 donne un exemple d'intégration du montant de charge et de décharge comme cela est connu de beaucoup d'autres documents dans ce domaine technique.

L'invention vise donc à remédier à ces inconvénients de l'art antérieur en proposant un procédé et un dispositif de charge électrique d'un accumulateur qui déterminent la valeur du complément de charge et, ainsi la charge totale à appliquer à l'accumulateur, et donc le moment précis où la charge doit être interrompue, en tenant compte de la profondeur de décharge initiale de l'accumulateur, de l'âge de l'accumulateur et de la température à laquelle la charge est opérée. L'invention vise également à proposer un tel procédé de charge qui puisse être mis en oeuvre sur un dispositif chargeur de type électrique, (c'est-à-dire recevant ou émettant des grandeurs électriques uniquement) non nécessairement régulé en courant de charge. L'invention vise donc également à proposer un dispositif électrique de charge qui soit régulé en courant de charge ou du type simplifié non régulé en courant de charge, et qui permette la mise en oeuvre du procédé selon l'invention.

L'invention vise également à proposer un tel procédé et un tel dispositif électrique de charge qui soient extrêmement simples et peu coûteux à mettre en oeuvre et à fabriquer.

Enfin, l'invention vise à proposer également un procédé et un dispositif électrique de charge qui permettent de réaliser une égalisation de l'accumulateur après la charge normale toutes les fois que cela est nécessaire. Une telle égalisation d'un accumulateur consiste à maintenir l'accumulateur sous le courant de charge pendant une durée déterminée au-delà de la charge et du complément de charge normalement nécessaires, et ce notamment dans le but d'homogénéiser l'électrolyte et les électrodes sur toute la hauteur de l'accumulateur. Une telle égalisation doit être effectuée régulièrement et, dans l'art antérieur, l'opportunité de réaliser une telle opération est laissée à la décision de l'utilisateur. Le procédé et le dispositif selon des modes de réalisation visent donc à rendre automatique et systématique toutes les fois que cela est nécessaire le déclenchement d'une phase d'égalisation.

Pour ce faire, l'invention concerne un procédé pour charger un accumulateur dans lequel on mesure en permanence le courant de charge I, la tension U aux bornes de l'accumulateur et le temps de charge t, on détermine en permanence la valeur de la dérivée $dU/dt$ et la valeur de la charge $Ah(t)$ déjà appliquée au temps t, on mémorise ces grandeurs dans des moyens de mémorisation permanente de valeurs instantanées, on détecte la valeur maximale absolue $Pm$ de la pente de la courbe représentant la valeur de la tension U en fonction du temps t, on calcule la charge totale Ah devant être appliquée à l'accumulateur après la détection et selon la valeur détectée maximale absolue $Pm$ de la pente de la courbe $U(t)$, et on arrête de charger l'accumulateur lorsque la charge appliquée $Ah(t)$ atteint la valeur de la charge totale Ah calculée en fonction de la valeur détectée de $Pm$.

De préférence, on détecte la valeur maximale absolue $Pm$ de la pente générale de la courbe lissée représentant la valeur de la tension U en fonction du temps t après suppression des signaux parasites de faible amplitude relative et haute fréquence relative.

En effet, on sait que la fonction $U(t)$ comporte un point d'inflexion au niveau de l'instant t correspondant sensiblement à un coefficient de charge de l'ordre de 0,8. Et les inventeurs ont déterminé que la valeur de la pente Pm de la courbe représentant U(t) à ce point d'inflexion fournit une image appropriée de l'âge de l'accumulateur, et de la température. De plus, cette valeur Pm dépend également de la profondeur de décharge.

Selon un mode de réalisation, on calcule la charge totale Ah à appliquer à l'accumulateur également en fonction de la valeur de la charge Ah(ti) déjà appliquée au temps ti où la pente générale de la courbe U(t) prend la valeur Pm/i après être passée par le maximum Pm, i étant un nombre entier non nul choisi arbitrairement. En effet, les inventeurs ont déterminé que la profondeur de décharge initiale pouvait être déterminée approximativement en fonction de cette charge Ah(ti) déjà appliquée. Ainsi, on détermine approximativement la profondeur de décharge PdD de l'accumulateur par la formule $PdD = q.Ah(ti)/C$ où C est la capacité nominale de la batterie et q est un coefficient choisi arbitrairement en fonction de l'expérience et/ou du type d'accumulateur. Et pour déterminer la charge Ah totale appliquée à l'accumulateur, on applique une formule qui varie selon la valeur ainsi déterminée de la profondeur de décharge PdD.

Après avoir détecté une valeur maximale de la pente générale de la courbe U(t) (c'est-à-dire une diminution de cette pente après cette valeur), on enregistre cette valeur en tant que valeur maximale absolue Pm, on continue à surveiller la valeur instantanée de la pente, on remplace la valeur mémorisée de Pm par une nouvelle valeur détectée si la pente générale croît à nouveau au-delà de la valeur mémorisée, et on calcule la charge totale Ah devant être appliquée, ce calcul étant effectué après la détection du temps tn où la pente générale de la courbe U(t) prend la valeur Pm/n, n étant un nombre entier non nul choisi arbitrairement selon l'expérience et/ou le type d'accumulateur mais de telle sorte que l'on soit sûr que la dernière valeur maximale mémorisée de la pente corresponde effectivement à la valeur maximale absolue Pm.

Ainsi, on détermine la charge Ah totale selon une formule :

$$Ah = K.Aho$$

où Aho est la charge appliquée au temps tn et K un coefficient qui varie selon la valeur de Pm et celle de Ah(ti) ou de PdD. K varie en escalier selon la valeur de Pm, pour Ah(ti) ou PdD constant. Egalement, K varie en escalier selon la valeur de Ah(ti) ou PdD, pour Pm constant.

Pour supprimer les signaux parasites de faible amplitude relative et haute fréquence relative de U(t) on effectue un lissage numérique sur les valeurs mesurées U(t) en réalisant pour chaque instant t, une moyenne des valeurs de U(t) sur une période $\delta t$ centrée sur t et dont la valeur est supérieure à la période de ces signaux.

Par ailleurs, on effectue un cycle de charge d'égalisation lorsque la valeur de la tension U mesurée au temps tn est inférieure à une valeur seuil Us prédéterminée et/ou lorsque la valeur Pm est inférieure à une valeur de seuil prédéterminée, en prolongeant la charge totale Ah d'une durée déterminée d'égalisation Te.

L'invention concerne également un dispositif (électrique) pour charger un accumulateur selon un procédé selon l'invention, caractérisé en ce qu'il comporte des moyens pour fournir une tension de charge ; des moyens pour mesurer en permanence le courant de charge I, la tension U aux bornes de l'accumulateur et le temps de charge t ; des moyens pour mémoriser ces valeurs à intervalles de temps réguliers ; des moyens de calcul programmés à microprocesseur pour détecter la valeur maximale absolue Pm de la pente de la courbe U(t) et pour calculer la charge totale Ah à appliquer en fonction de la valeur détectée Pm; des moyens pour interrompre automatiquement la charge lorsque la charge totale Ah a été appliquée. Les moyens de calcul programmés à microprocesseur comportent des moyens de lissage numérique de la courbe U(t). Le dispositif selon l'invention comporte des moyens de mémorisation et de saisie des coefficients et nombres nécessaires au calcul de la charge totale Ah selon le procédé selon l'invention.

Le procédé et le dispositif de charge selon l'invention permettent de charger convenablement tout type d'accumulateur quels que soient son âge, sa température, sa profondeur de décharge, sans nécessiter une régulation du courant de charge, ni des moyens de mesure performants. De plus, avec un procédé et un dispositif selon des modes de réalisation, on peut fournir à l'utilisateur à la fin de la charge les valeurs de la profondeur de décharge initiale, l'état de la batterie qui a été chargée (neuve, bon état, ou vieille). Egalement, un cycle d'égalisation est automatiquement effectué dès que celui-ci est utile. En variante, un voyant indicateur peut renseigner l'utilisateur sur la nécessité d'effectuer ce cycle d'égalisation sur sa commande.

D'autres caractéristiques et avantages de l'invention apparaîtront à la lecture de la description suivante qui se réfère aux figures annexées dans lesquelles :

- La figure 1 est un diagramme illustrant l'allure de la courbe théorique représentant la tension U aux bornes de l'accumulateur en fonction du coefficient de charge.

- La figure 2 est un diagramme illustrant l'allure des courbes représentant le coefficient de charge optimum déterminé par mesures électrochimiques en fonction de la profondeur de décharge PdD et selon l'âge de l'accumulateur.

- La figure 3 est un diagramme illustrant une courbe C1 expérimentale représentant la tension U(t) instantanée mesurée aux bornes de l'accumulateur en fonction du temps t et la courbe C2 représentant cette tension U(t) après lissage numérique.

- La figure 4 est un diagramme illustrant la courbe expérimentale représentant la dérivée dU/dt de la tension U en fonction du temps t de la figure 3.
- La figure 5 est un diagramme illustrant des courbes expérimentales représentant les variations de la pente maximale absolue Pm de la courbe U(t) en fonction de la profondeur de décharge PdD et selon l'âge de l'accumulateur.
- La figure 6 est un diagramme illustrant des courbes expérimentales représentant les variations de la tension U(tn) au temps tn où la pente générale de la courbe U(t) prend une valeur Pm/n, en fonction de la profondeur de décharge PdD et selon l'âge de l'accumulateur.
- La figure 7 est un diagramme illustrant les différentes étapes d'un procédé selon un mode de réalisation jusqu'au calcul de la charge Ah à appliquer à l'accumulateur.
- La figure 8 est un organigramme illustrant de façon plus détaillée l'étape de calcul de la charge Ah à appliquer à l'accumulateur et les étapes subséquentes d'un procédé selon un mode de réalisation.
- La figure 9 est un schéma synoptique illustrant la composition fonctionnelle d'un dispositif selon l'invention.

L'invention concerne un procédé pour charger un accumulateur 1 de façon appropriée en prenant en compte l'âge, la température et la profondeur de décharge de cet accumulateur 1.

Dans toute la présente demande, le terme "accumulateur" est employé pour désigner soit un élément d'accumulateur soit une batterie d'accumulateurs destiné à être chargé. Le terme "charge" désigne généralement la quantité d'ampères-heures fournie à l'accumulateur au cours du procédé, c'est-à-dire pendant le temps durant lequel l'accumulateur 1 est connecté au dispositif chargeur 2. Ce terme peut néanmoins être également employé pour désigner l'opération qui consiste à mettre en oeuvre le procédé, c'est-à-dire à fournir un courant de charge à l'accumulateur.

Les termes "coefficient de charge", "profondeur de décharge" et "complément de charge" désignent les notions habituelles connues dans le domaine technique à savoir :

. coefficient de charge : quantité cumulée d'ampères-heures rechargée divisée par la quantité d'ampères-heures déchargée de l'accumulateur au début de la charge

. profondeur de décharge : quantité d'ampères-heures déchargée de l'accumulateur depuis la dernière charge complète divisée par la capacité nominale de l'accumulateur, exprimée en pourcentage.

. complément de charge : quantité d'ampères-heures à fournir à partir du moment où le coefficient de charge est égal à 1 pour obtenir la charge totale Ah nécessaire.

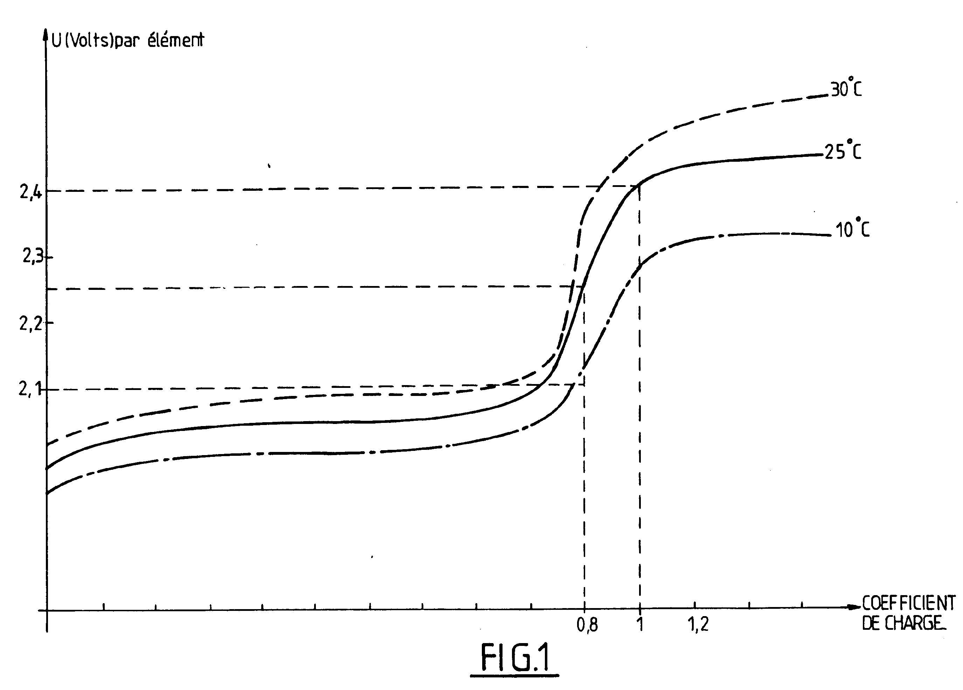

Sur la figure 1, on voit que la courbe théorique exprimant la tension U aux bornes de l'accumulateur en fonction du coefficient de charge, et donc du temps, est modifiée selon la température. On peut également en déduire que la courbe représentant la fonction U(t) théorique présente un point d'inflexion où la pente P de cette courbe présente un maximum absolu Pm. De plus, la valeur de cette pente maximale absolue Pm dépend aussi de la température de l'accumulateur 1.

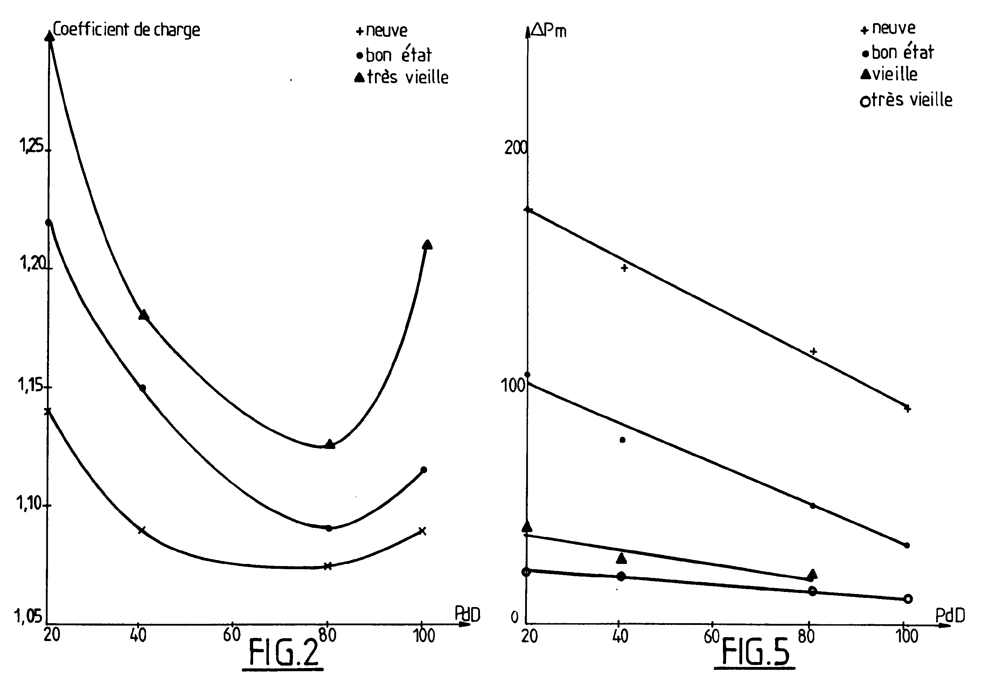

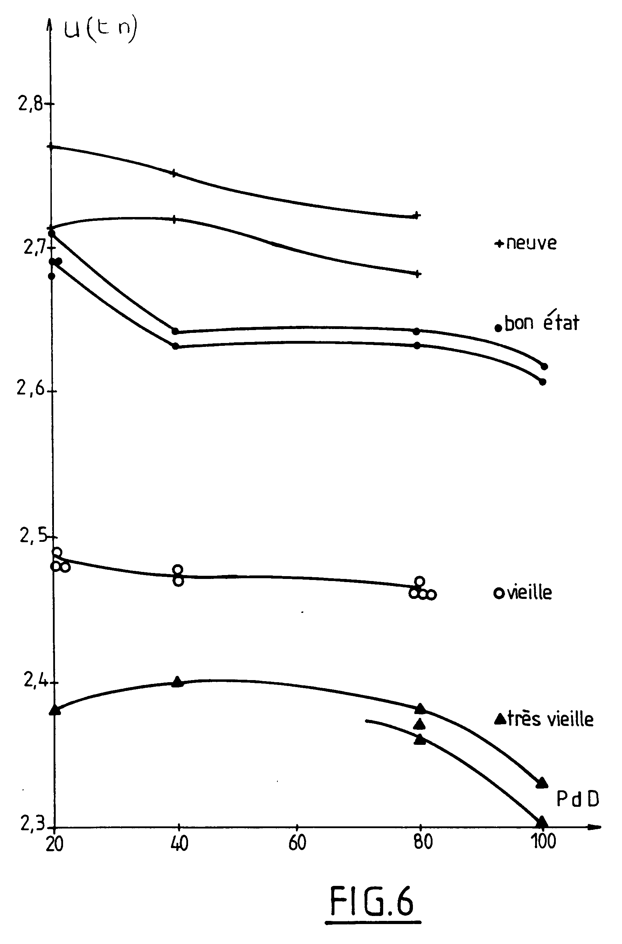

Sur la figure 2, on voit également que le coefficient de charge théoriquement nécessaire pour charger convenablement un accumulateur dépend fortement d'une part de la profondeur de décharge PdD, et également de l'âge de l'accumulateur 1. Et sur la figure 5, on voit également que la valeur de la pente maximale absolue Pm de la courbe représentant U(t) dépend également de la profondeur de décharge PdD et de l'âge de l'accumulateur 1. Et c'est pourquoi, dans un procédé selon l'invention, on détermine la charge totale Ah devant être appliquée à l'accumulateur 1 en fonction de la valeur maximale absolue Pm de la pente générale de la courbe représentant U(t), c'est-à-dire la valeur de la pente P de cette courbe à son point d'inflexion théorique. Ce faisant, on tient compte pour déterminer la charge totale Ah aussi bien de la profondeur de décharge initiale, que de la température et de l'âge de l'accumulateur.

Ainsi, l'invention concerne un procédé pour charger un accumulateur 1 caractérisé en ce qu'on mesure en permanence le courant de charge I, la tension U aux bornes de l'accumulateur 1 et le temps de charge t, on détermine en permanence la valeur de la dérivée dU/dt de la fonction U(t) et la valeur de la charge Ah(t) déjà appliquée au temps t, on mémorise ces grandeurs I, U, t, dU/dt, Ah(t) dans des moyens de mémorisation permanente de valeurs instantanées, on détecte la valeur maximale absolue Pm de la pente de la courbe représentant la valeur de la tension U en fonction du temps t, on calcule la charge totale Ah devant être appliquée à l'accumulateur 1 après la détection et selon la valeur détectée maximale absolue Pm de la pente de la courbe U(t), et on arrête de charger l'accumulateur lorsque la charge appliquée Ah(t) atteint la valeur de la charge totale Ah calculée en fonction de la valeur détectée de Pm.

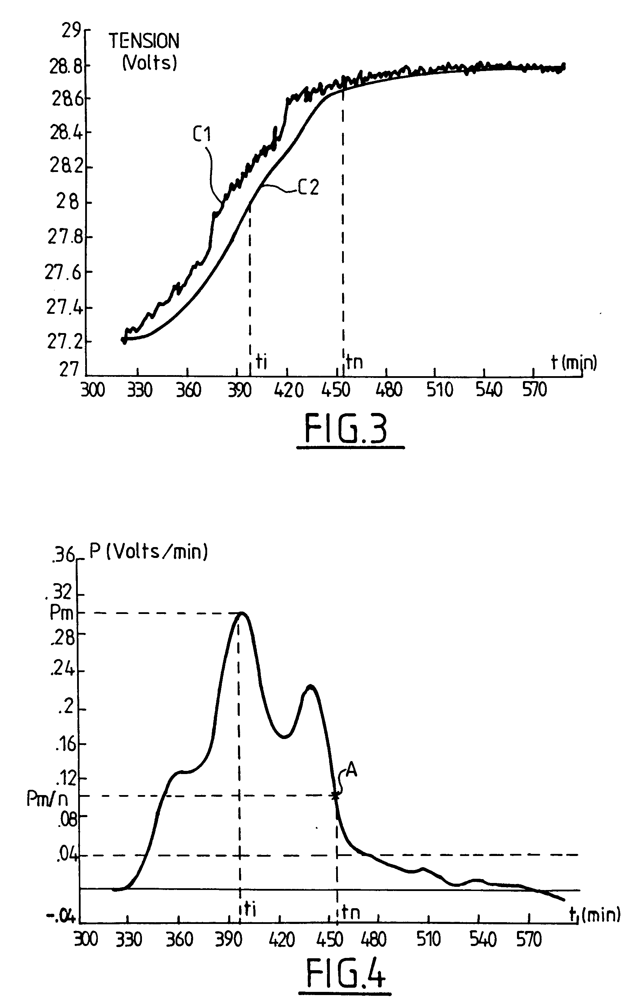

Comme on le voit sur la figure 3, la valeur mesurée instantanée U(t) représentée par la courbe C1 suit non seulement l'allure de la courbe théorique qui est représentée à la figure 1, mais en pratique comporte des signaux de faible amplitude (inférieure à 0,1 V) et de relativement haute fréquence (supérieure à 0,001 Hz). Ainsi, si l'on veut que le calcul de la dérivée dU/dt soit représentatif effectivement de la pente générale de la courbe U(t) pour permettre la détection du point d'inflexion théorique et de la pente maximale absolue Pm, il est avantageux de supprimer des valeurs mesurées de U(t), ces signaux de faible amplitude relative et de haute fréquence relative. Pour ce faire, on peut effectuer un filtrage en fréquence ou, de préférence compte tenu de la très faible valeur de la fréquence de seuil, un lissage numérique. Ainsi, pour supprimer les signaux parasites de faible amplitude relative et haute fréquence relative de la courbe représentant U(t), on effectue un lissage numérique sur les valeurs mesurées U(t) en réalisant pour chaque instant t, une moyenne de valeur de U(t) sur une période δt centrée sur t dont la valeur est supérieure à la période de ces signaux. Par exemple, la période de lissage δt est inférieure ou égale à 20 min. Un tel procédé de lissage numérique de valeurs mesurées est déjà connu de l'état de la technique et ne sera donc pas décrit plus en détail dans la présente demande. Le lissage numérique de la courbe C1 fournit la courbe C2. On constate qu'en réalisant un tel lissage numérique par moyennes successives autour de chaque instant t où la valeur est mesurée pour fournir un point de la courbe, un décalage temporel est nécessairement induit dans la courbe représentant U(t). Bien évidemment, ce décalage temporel est pris en compte dans le calcul de la charge totale Ah devant être appliquée à l'accumulateur, et toutes les conditions et valeurs portant sur le temps de charge t mentionné dans tout le texte correspondent aux valeurs réelles du temps t après correction du décalage temporel induit par le lissage numérique.

Dans tout le texte de la présente demande, l'expression "pente générale" désigne la pente de la courbe C2 représentant U(t) mesurée après suppression des signaux parasites de faible amplitude et de haute fréquence relative par exemple par lissage numérique comme indiqué ci-dessus.

La valeur maximale absolue Pm de la pente générale de la courbe U(t) au point d'inflexion fournit une bonne représentation des conditions de température, d'âge et de profondeur de décharge de l'accumulateur. Néanmoins, pour tenir compte de façon plus précise de la profondeur de décharge PdD de l'accumulateur 1, on calcule la charge totale Ah également en fonction de la valeur de la charge Ah(ti) déjà appliquée au temps ti où la pente générale de la courbe représentant U(t) prend la valeur Pm/i, i étant un nombre entier non nul choisi arbitrairement. En effet, la charge Ah(ti) déjà appliquée au temps ti permet de fournir une bonne approximation de la profondeur de décharge PdD. Et on détermine approximativement la profondeur de décharge PdD de l'accumulateur par la formule :

$$PdD = q.Ah(ti)/C$$

où C est la capacité nominale de l'accumulateur et q est un coefficient choisi arbitrairement en fonction de l'expérience et/ou du type d'accumulateur. Pour calculer la charge totale Ah devant être appliquée à l'accumulateur, on applique une formule qui varie selon la valeur approximative ainsi déterminée de la profondeur de décharge PdD. Dès lors, on calcule la charge totale Ah devant être appliquée à l'accumulateur 1 également directement en fonction de la valeur approximative déterminée de la profondeur de décharge initiale PdD.

On peut choisir i = 1, c'est-à-dire déterminer approximativement la profondeur de décharge PdD en fonction de la charge Ah(ti) déjà appliquée au temps ti correspondant au point d'inflexion où la pente générale de la courbe représentant U(t) est maximale Pm. Dans un tel cas, on sait en effet qu'au temps de charge ti correspondant à ce point d'inflexion, la charge déjà appliquée Ah(ti) correspond à environ 80 % de la quantité d'ampères-heures déchargée de l'accumulateur avant que celui-ci ne soit mis en charge.

Cela étant, comme on peut le voir sur les figures 3 et 4, la courbe réelle U(t) mesurée comporte en fait plusieurs points d'inflexion dans sa partie de forte pente. Selon l'invention, on détermine la charge totale Ah devant être appliquée à l'accumulateur en fonction de la pente maximale absolue Pm, c'est-à-dire au point d'inflexion où cette pente est la plus forte. C'est pourquoi, après avoir détecté une valeur maximale de la pente générale P de la courbe U(t) (correspondant à une diminution de cette pente générale P après une augmentation), on enregistre cette valeur en tant que valeur maximale absolue Pm, on continue à surveiller la valeur instantanée P de la pente générale, on remplace la valeur mémorisée de Pm par une nouvelle valeur détectée si la pente générale P croît à nouveau au-delà de la valeur mémorisée préalablement, et on calcule la charge totale Ah devant être appliquée (ou la charge Ahf restant à appliquer) après avoir détecté le temps tn où la pente générale P de la courbe U(t) diminue à nouveau jusqu'à la valeur Pm/n, n étant un nombre entier non nul choisi arbitrairement selon l'expérience et/ou le type d'accumulateur mais de telle sorte que l'on soit sûr que la dernière valeur maximale mémorisée de la pente générale P correspond effectivement à la valeur maximale absolue Pm recherchée. En effet, si la valeur de la pente générale P diminue jusqu'à la valeur Pm/n, Pm étant la plus forte valeur de pente détectée préalablement, on est sûr que cette valeur Pm détectée préalablement correspond effectivement à la valeur maximale absolue Pm recherchée du fait de l'allure de la courbe représentant la pente générale P en fonction du temps (figure 4). Pour ce faire, on choisit généralement n supérieur ou égal à 2. Quand on arrive au point A où la pente générale P atteint la valeur Pm/n, on sait en effet que la valeur de Pm mémorisée préalablement correspond effectivement à la valeur maximale absolue de la pente générale P.

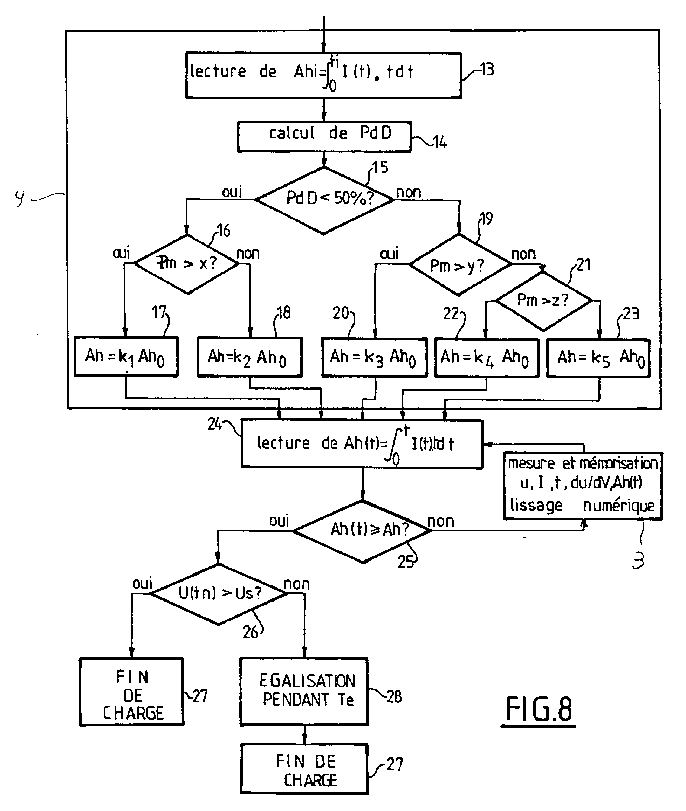

On calcule la charge totale Ah devant être appliquée à l'accumulateur 1 uniquement après avoir détecté effectivement et de façon certaine la valeur Pm maximale absolue de la pente générale de la courbe U(t), c'est-à-dire après le temps tn. Cela signifie donc que le procédé de calcul de la charge totale Ah représenté schématiquement sur la figure 8 n'est mis en oeuvre qu'après détection du temps tn, c'est-à-dire qu'après détection du fait que la pente générale P diminue jusqu'à la valeur Pm/n après être passée par la valeur Pm.

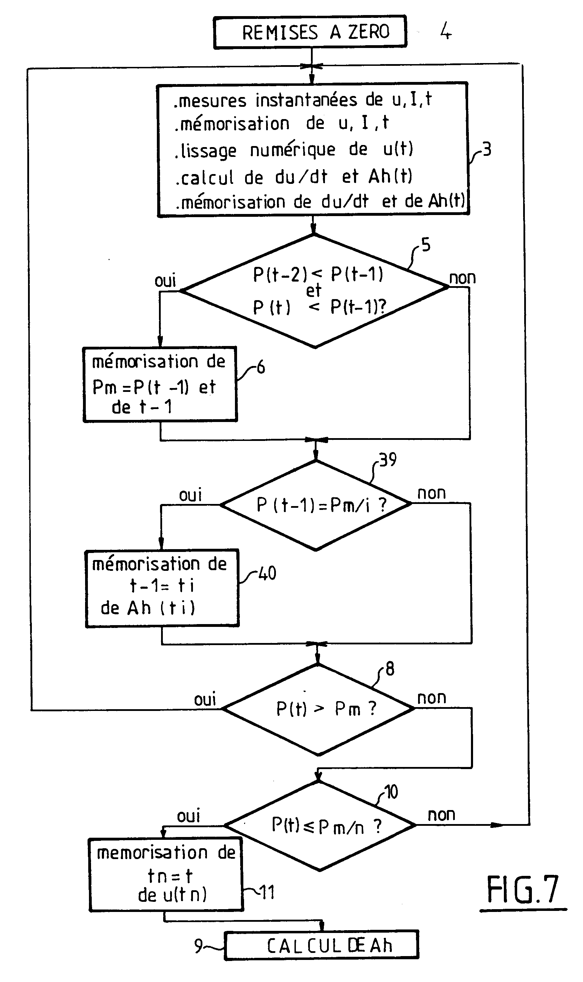

Le début du procédé commence par une étape 4 de remise à zéro des compteurs et des mémoires. Dans un procédé selon la figure 7, on mesure en 3 en permanence le courant de charge I, la tension U aux bornes de l'accumulateur et le temps de charge t. Dans cette étape 3, effectuée en permanence c'est-à-dire pour chaque temps t de mesure de U, I, t, on détermine également en permanence la valeur de la dérivée dU/dt de la fonction U(t) et la valeur de la charge Ah(t) déjà appliquée au temps t, et on mémorise toutes ces grandeurs I, U, t, dU/dt, Ah(t) dans des moyens de mémorisation permanente de ces valeurs instantanées.

On détermine la dérivée dU/dt de la fonction U(t) pour chaque temps t de mesure, de façon numérique ou par logiciel, ou de façon électronique. On calcule également de façon numérique, par logiciel ou de façon électronique la valeur de la charge Ah(t) déjà appliquée au temps t. Pour ce faire, on cumule le produit des valeurs instantanées mesurées du courant de charge I et du temps de charge t au cours du temps. Ainsi, Ah(t) est exprimée par l'intégrale de zéro à t du produit I(t) x t.

Egalement, pour chaque temps t de mesure, on effectue le lissage numérique décrit ci-dessus en effectuant une moyenne des valeurs de U(t) sur la période δt centrée sur t et on mémorise la valeur lissée ainsi obtenue de U(t) pour obtenir à partir de la courbe mesurée C1 de la figure 3 la courbe lissée C2 représentée sur cette même figure.

La dérivée dU/dt calculée est effectuée à partir des valeurs de U(t) obtenue après le lissage numérique, c'est-à-dire après suppression des signaux parasites de faible amplitude relative et haute fréquence relative. La dérivée dU/dt calculée est donc celle de la fonction U(t) représentée par la courbe lissée C2 de la figure 3.

Si cette valeur de la pente n'est pas atteinte, on reprend le procédé à l'étape 3 de mesure et de mémorisation. Après l'étape 3 de mesure et de mémorisation, on détecte par le test 5 la présence d'un maximum de pente Pm. Cette détection est effectuée par comparaison de la valeur calculée au temps t-1 (c'est-à-dire le temps précédent le temps courant t) avec les valeurs obtenues respectivement au temps de mesure courant t et au temps de mesure t-2 deux fois antérieur (c'est-à-dire précédent le temps t-1). Si les deux valeurs P(t-2) et P(t) obtenues pour ces deux temps sont inférieures à celles du temps précédent P(t-1), la valeur P au temps t-1 correspond à un maximum et est alors mémorisée dans l'étape 6 en tant que maximum de pente Pm. Le temps t-1 correspondant à ce maximum est également mémorisé.

Les valeurs de P correspondent à celles obtenues par le calcul de la dérivée dU/dt effectué à chaque instant t à partir des valeurs de U(t) obtenues après le lissage numérique. Après l'étape 6 de mémorisation de la valeur maximum ou après le test 5 si celui-ci ne permet pas de détecter un maximum, on effectue en 39 un test visant à détecter la valeur du temps ti pour laquelle la pente générale atteint la valeur Pm/i. Ce test est effectué sur la valeur de la pente au temps t-1 précédent le temps courant t. En effet, il faut pouvoir détecter ce temps ti même lorsque l'on a choisit arbitrairement le nombre entier naturel i égal à 1. Dans le cas où l'on détecte une valeur de pente pour le temps t-1 qui correspond à Pm/i, on mémorise le temps ti correspondant et la valeur Ah(ti) qui permettra ultérieurement de calculer de façon approximative la profondeur de décharge. Cette mémorisation est effectuée dans l'étape 40. Après l'étape 40 de mémorisation ou après le test 39 si celui-ci ne permet pas de détecter le temps ti, on effectue le test 8 permettant de s'assurer que la valeur de Pm préalablement mémorisée est celle d'un maximum absolu ou non. On compare alors P(t) à cette valeur Pm. Si la valeur de la pente générale P devient supérieure à cette valeur mémorisée Pm, la valeur mémorisée ne correspond pas au maximum absolu de la pente générale. On reprend donc dans ce cas le procédé à l'étape 3 de mesure et de mémorisation. Au contraire, si la valeur de la pente générale P obtenue après mémorisation d'un maximum Pm reste toujours inférieure à ce maximum Pm, on a bien détecté un maximum absolu de la pente et l'on passe ensuite à la détection du temps tn auquel la pente P prend la valeur Pm/n grâce au test 10. Si la pente P(t) ne prend pas la valeur Pm/n, on reprend le procédé simplement à l'étape 3 de mesure et de mémorisation. Au contraire, pour le premier temps de mesure tn où la pente générale P devient inférieure ou égale à Pm/n, c'est-à-dire où l'on satisfait le test 10, on mémorise lors de l'étape 11 cette valeur du temps tn et la valeur obtenue après lissage numérique de la tension U(tn), et on procède ensuite à l'étape 9 proprement dite de calcul de la charge totale Ah représentée sur la figure 8.

i est différent de n et, plus exactement, i est inférieur à n. En effet, il faut pouvoir procéder au calcul de la charge totale Ah devant être appliquée dès que l'on atteint le temps tn où l'on sait que l'on a détecté la valeur maximale absolue Pm de la pente générale.

Après l'étape de mémorisation 11 de tn et de U(tn), on lit donc (figure 8) la valeur mémorisée Ah(ti) en 13, puis on calcule approximativement en 14 la profondeur de décharge PdD en appliquant la formule préalablement indiquée.

On calcule la charge Ah totale devant être appliquée à l'accumulateur 1 selon une formule :

$$Ah = K.Aho$$

où Aho est la charge appliquée au temps tn et K est un coefficient qui varie selon la valeur de Pm et celle de Ah(ti) ou de la profondeur de décharge PdD. La valeur du coefficient K est déterminée par calcul selon les valeurs détectées de Pm et la valeur calculée de Ah(ti) ou de PdD. On prévoit une variation du coefficient K en escalier en fonction de la valeur de Pm pour Ah(ti) ou PdD constant. Egalement, K varie en escalier selon la valeur de Ah(ti) ou de PdD, pour Pm constant.

Plus précisément, si la profondeur de décharge calculée approximativement à l'étape 14 PdD est inférieure à une valeur r choisie arbitrairement selon l'expérience et/ou le type d'accumulateur, on détermine la charge totale Ah devant être appliquée selon la formule :

$$Ah = k1.Aho \qquad si\ Pm > x$$
$$Ah = k2.Aho \qquad si\ Pm \leqq x$$

où x, k1, k2 sont des valeurs choisies arbitrairement selon l'expérience et/ou le type d'accumulateur. Egalement, si la profondeur de décharge calculée approximativement PdD est supérieure ou égale à une valeur s choisie arbitrairement selon l'expérience et/ou le type d'accumulateur, on détermine la charge totale Ah devant être appliquée selon la formule :

$$Ah = k3.Aho \qquad si\ Pm > y$$
$$Ah = k4.Aho \qquad si\ z < Pm \leqq y$$
$$Ah = k5.Aho \qquad si\ Pm \leqq z$$

où y, z, k3, k4, k5 sont des valeurs choisies arbitrairement selon l'expérience et/ou le type d'accumulateur.

On choisit r = s, et sur la figure 8, on a représenté le cas où r = s = 50 %. Ainsi, on effectue le test 15 après le calcul approximatif de PdD, test 15 consistant à savoir si la valeur calculée de PdD est inférieure à 50 % ou non. Si cela est le cas, on compare alors la valeur mémorisée préalablement Pm à une valeur x prédéterminée en 16. Si Pm est supérieur à x, on applique la formule Ah = k1.Aho dans l'étape 17. Si Pm n'est pas supérieur à x, on applique la formule Ah = k2.Aho dans l'étape 18. Dans le cas où PdD n'est pas inférieur à 50 %, on effectue le test 19 consistant à savoir si Pm est supérieur à y. Si tel est le cas, on applique la formule Ah = k3.Aho en l'étape 20. Si tel n'est pas le cas, on effectue un nouveau test 21 consistant à savoir si Pm est supérieur ou non à z. Dans l'affirmative, on applique la formule Ah = k4.Aho en l'étape 22. Dans la négative, on applique la formule Ah = k5.Aho dans l'étape 23.

Bien sûr, on a z < y. Et, selon l'invention, on a également y < x. Lors de chacune des étapes 17, 18, 20, 22, 23 de calcul de la charge totale Ah selon une formule appropriée, on mémorise la valeur ainsi calculée simultanément. A partir de ce temps tn où l'on a calculé la valeur de la charge totale Ah devant être appliquée, on contrôle la fin de la charge lors des étapes subséquentes. Ainsi, pour chaque temps de mesure après le calcul de la charge totale Ah, on lit la valeur calculée et mémorisée de la charge Ah(t) déjà appliquée à l'accumulateur dans l'étape 24 et on compare cette charge déjà appliquée Ah(t) à la charge totale Ah devant être appliquée lors du test 25. Si Ah(t) n'est pas supérieure ou égale à Ah, on reprend le procédé pour chaque temps subséquent à l'étape 24 en effectuant préalablement l'étape 3 de mesure et mémorisation et de lissage numérique. Au contraire, si l'on détecte une valeur de charge déjà appliquée Ah(t) supérieure ou égale à la charge totale Ah calculée, on peut interrompre le procédé de charge.

Mais, préalablement, on détermine la nécessité ou non d'effectuer un cycle d'égalisation de l'accumulateur. Pour ce faire, on effectue le test 26 consistant à savoir si la valeur de la tension mémorisée en 12 U(tn) prise au temps tn où l'on a calculé la charge totale Ah est supérieure ou non à une valeur de seuil Us préalablement choisie arbitrairement en fonction de l'expérience et/ou de l'accumulateur. Ainsi, on effectue un cycle de charge d'égalisation lorsque la valeur de la tension U mesurée au temps tn (après lissage numérique) est inférieure à une valeur seuil Us, en prolongeant la charge totale Ah d'une durée déterminée d'égalisation Te. Si le test 26 détecte que U(tn) est supérieur à Us, on interrompt la charge en 27. Au contraire, si l'on détecte que U(tn) n'est pas supérieur à Us, on procède à une égalisation de l'accumulateur en le soumettant au courant de charge I pendant une durée supplémentaire déterminée Te. Cette valeur de Te est choisie arbitrairement en fonction de l'expérience et/ou de l'accumulateur. Cette phase d'égalisation est représentée par l'étape 28 sur la figure 8. En variante ou en combinaison, on peut aussi effectuer un tel cycle d'égalisation lorsque la valeur de Pm est inférieure à une valeur de seuil prédéterminée. Après la phase d'égalisation, c'est-à-dire lorsque le temps Te s'est écoulé, on interrompt la charge en 27. En variante, au lieu de prévoir une phase d'égalisation 28 déclenchée automatiquement, on peut simplement prévoir la signalisation visuelle du résultat du test 26 sur le panneau du dispositif de charge selon l'invention.

On choisit le seuil Us de tension au-dessous duquel on procède à l'égalisation de l'ordre de 2,4 V par élément de l'accumulateur 1. En effet, la figure 6 montre que pour les profondeurs de décharge courantes comprises entre 40 et 80 %, la valeur de U(tn) par élément est toujours supérieure à 2,4 V lorsque l'accumulateur est en relativement bon état et peu âgé. Au contraire, lorsque l'accumulateur est très vieux, cette valeur de U(tn) est inférieure à 2,4 V. C'est dans ces conditions où l'accumulateur est très vieux qu'il faut procéder automatiquement à un cycle d'égalisation.

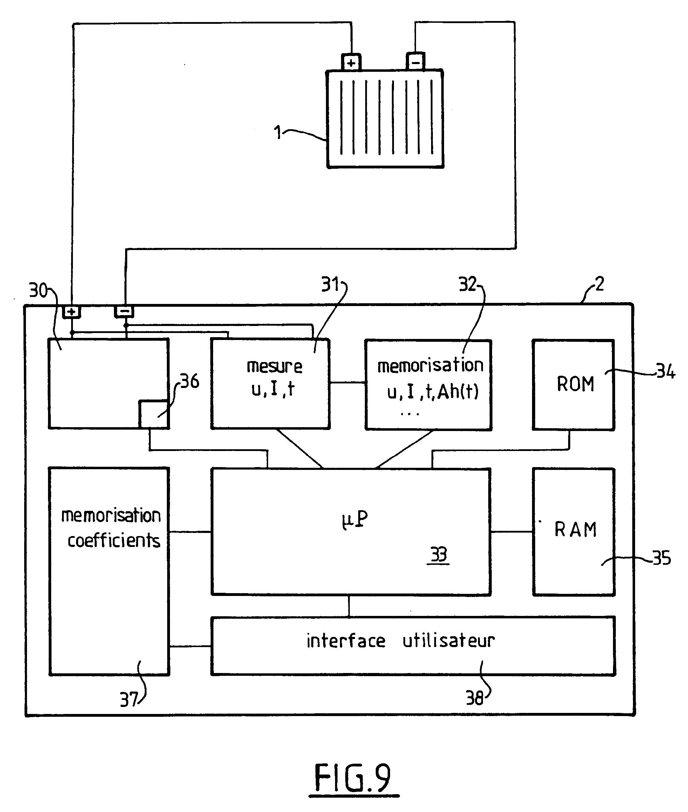

Un dispositif préféré pour charger un accumulateur selon le procédé selon l'invention décrit ci-dessus est représenté schématiquement et de façon fonctionnelle à la figure 9. Un tel dispositif 2 comporte des moyens 30 pour fournir une tension de charge à l'accumulateur 1. Ces moyens 30 sont en fait constitués d'un dispositif chargeur conventionnel. Le dispositif chargeur 2 comporte également des moyens 31 pour mesurer en permanence le courant de charge I, la tension U aux bornes de l'accumulateur 1 et le temps de charge t ; des moyens 32 pour mémoriser ces valeurs à intervalles de temps réguliers ; des moyens 33, 34, 35 de calcul programmés à microprocesseur pour calculer la charge totale Ah devant être appliquée à l'accumulateur conformément aux formules et dans les conditions du procédé selon l'invention ; des moyens 36 pour interrompre automatiquement la charge lorsque la charge totale Ah a été appliquée (avec ou sans cycle d'égalisation selon les cas).

Les moyens 33, 34, 35 de calcul comportent un microprocesseur 33, une mémoire ROM 34, et une mémoire RAM 35 associée au microprocesseur 33. Les moyens 33, 34, 35 de calcul programmés à microprocesseur comportent des moyens de lissage numérique de la courbe représentant la valeur de la tension U en fonction du temps t. Les valeurs ainsi obtenues de U(t) après lissage numérique sont mémorisées dans les moyens 32 de mémorisation. Egalement, les moyens 33, 34, 35 de calcul programmés à microprocesseur effectuent le calcul de la dérivée dU/dt à chaque instant t de mesure et de la charge déjà appliquée Ah(t) en réalisant l'intégrale du produit du courant de charge I par le temps de charge t. Ces valeurs dU/dt et Ah(t) sont également mémorisées dans les moyens 32 de mémorisation.

Le microprocesseur est programmé de façon à réaliser le procédé représenté schématiquement sur les figures 7 et 8 et décrit ci-dessus. Comme on le voit, le programme à réaliser pour ce faire est extrêmement simple et ne comporte que des opérations parfaitement connues de l'art antérieur et que l'homme du métier peut réaliser par une programmation simple.

Le dispositif chargeur 2 comporte également des moyens 37 de mémorisation et de saisie des coefficients et nombres nécessaires au calcul de la charge totale Ah. Ces moyens de mémorisation et de saisie des coefficients et nombres peuvent être contrôlés par des moyens 38 formant une interface avec l'utilisateur, constitués par exemple d'un clavier (non représenté). Les moyens 37 de mémorisation et de saisie permettent la mémorisation et la saisie des coefficients q, r, s, x, y, z, k1, k2, k3, k4, et k5.

Comme on le voit, ce dispositif pour charger un accumulateur 1 est extrêmement simple à réaliser, et peu coûteux, contrairement par exemple aux dispositifs chargeurs à courant régulé connus dans l'art antérieur qui sont complexes et onéreux.

En pratique, le procédé selon l'invention pourra être mis en oeuvre dans tout chargeur du commerce régulé ou non et permettra ainsi de maîtriser parfaitement la charge totale Ah devant être appliquée à l'accumulateur en fonction de sa profondeur de décharge initiale, de sa température et de son âge.

Les différents circuits et programmes nécessaires à la réalisation du dispositif chargeur 2 et à l'exécution du procédé, ainsi que les valeurs précises des différents coefficients appliqués dans les formules pourront être déterminées de façon évidente par l'homme du métier. En pratique, les valeurs à donner aux coefficients q, r, s, x, y, z, k1, k2, k3, k4 et k5 varient peu en fonction des accumulateurs et peuvent être conservées pour tous les accumulateurs de même type. L'invention peut faire l'objet de nombreuses variantes par rapport au mode de réalisation préférentiel décrit ci-dessus.

L'invention est particulièrement applicable bien que de façon non exclusive, pour charger les batteries d'accumulateurs de traction utilisées dans les véhicules électriques tels que les chariots de manutention. Plus généralement, l'invention est applicable pour charger tout accumulateur dont la charge doit être déterminée avec précision, notamment les accumulateurs à électrolyte liquide au plomb.

## Revendications

1. Procédé pour charger un accumulateur dans lequel on mesure en permanence le courant de charge I, la tension U aux bornes de l'accumulateur et le temps de charge t, on détermine en permanence la valeur de la dérivée dU/dt de la fonction U(t) et la valeur de la charge Ah(t) déjà appliquée au temps t, on mémorise ces grandeurs dans des moyens de mémorisation permanente de valeurs instantanées, caractérisé en ce qu'on détecte la valeur maximale absolue Pm de la pente de la courbe représentant la valeur de la tension U en fonction du temps t, on calcule la charge totale Ah devant être appliquée à l'accumulateur après la détection et selon la valeur détectée maximale absolue Pm de la pente de la courbe U(t), et on arrête de charger l'accumulateur lorsque la charge appliquée Ah(t) atteint la valeur de la charge totale Ah calculée en fonction de la valeur détectée de Pm.

2. Procédé selon la revendication 1 caractérisé en ce que l'on détecte la valeur maximale absolue Pm de la pente générale de la courbe lissée représentant la valeur de la tension U en fonction du temps t après suppression des signaux parasites de faible amplitude relative et haute fréquence relative.

3. Procédé selon l'une quelconque des revendications 1 et 2 caractérisé en ce qu'on calcule la charge totale Ah également en fonction de la valeur de la charge Ah(ti) déjà appliquée au temps ti où la pente générale de la courbe représentant U(t) prend la valeur Pm/i après être passée par le maximum Pm, i étant un nombre entier non nul choisi arbitrairement.

4. Procédé selon la revendication 3 caractérisé en ce que l'on détermine approximativement la profondeur de décharge PdD de l'accumulateur par la formule PdD = q.Ah(ti)/C

où C est la capacité nominale de l'accumulateur et q est un coefficient choisi arbitrairement en fonction de l'expérience et/ou du type d'accumulateur, et en ce que pour calculer la charge totale Ah, on applique une formule qui varie selon la valeur ainsi déterminée de PdD.

5. Procédé selon l'une quelconque des revendications 1 à 4 caractérisé en ce qu'après avoir détecté une valeur maximale de la pente générale de la courbe U(t), on enregistre cette valeur en tant que valeur maximale absolue Pm, on continue à surveiller la valeur instantanée P de la pente générale, on remplace la valeur mémorisée de Pm par une nouvelle valeur détectée si la pente générale P croît à nouveau au-delà de la valeur mémorisée, et on calcule la charge totale Ah devant être appliquée, ce calcul étant effectué après la détection du temps tn où la pente générale P de la courbe U(t) prend la valeur Pm/n, n étant un nombre entier non nul choisi arbitrairement selon l'expérience et/ou le type d'accumulateur mais de telle sorte que l'on soit sûr que la dernière valeur maximale mémorisée de la pente générale P corresponde effectivement à la valeur maximale absolue Pm.

6. Procédé selon l'une quelconque des revendications 1 à 5 caractérisé en ce que pour supprimer les signaux parasites de faible amplitude relative et haute fréquence relative de U(t) on effectue un lissage numérique sur les valeurs mesurées U(t) en réalisant pour chaque instant t, une moyenne des valeurs de U(t) sur une période δt centrée sur t et dont la valeur est supérieure à la période de ces signaux.

7. Procédé selon la revendication 6 caractérisé en ce que la période de lissage Te est inférieure ou égale à 20 min.

8. Procédé selon l'une quelconque des revendications 1 à 7 caractérisé en ce que l'on calcule la charge Ah totale selon une formule :

Ah = K Aho

où Aho est la charge appliquée au temps tn et K un coefficient qui varie selon la valeur de Pm et celle de Ah(ti) ou de PdD.

9. Procédé selon la revendication 8 caractérisé en ce que K varie en escalier selon la valeur de Pm, pour Ah(ti) ou PdD constant.

10. Procédé selon l'une quelconque des revendications 8 et 9 caractérisé en ce que K varie en escalier selon la valeur de Ah(ti) ou PdD, pour Pm constant.

11. Procédé selon l'une quelconque des revendications 1 à 10 caractérisé en ce que si PdD est inférieure à une valeur r choisie arbitrairement selon l'expérience et/ou le type d'accumulateur, on détermine la charge totale Ah selon la formule :

Ah = k1.Aho    si Pm > x
Ah = k2.Aho    si Pm ≦ x

où x, k1, k2 sont des valeurs choisies arbitrairement selon l'expérience et/ou le type d'accumulateur.

12. Procédé selon l'une quelconque des revendications 1 à 11 caractérisé en ce que si PdD est supérieure ou égale à une valeur s choisie arbitrairement selon l'expérience et/ou le type d'accumulateur, on détermine la charge totale Ah selon la formule :

Ah = k3.Aho    si    Pm > y
Ah = k4.Aho    si    z < Pm ≦ y
Ah = k5.Aho    si    Pm ≦ z

où y, z, k3, k4, k5 sont des valeurs choisies arbitrairement selon l'expérience et/ou le type d'accumulateur.

13. Procédé selon les revendications 11 et 12 caractérisé en ce que r = s.

14. Procédé selon l'une quelconque des revendications 1 à 13 caractérisé en ce que l'on effectue un cycle de charge d'égalisation lorsque la valeur de la tension U mesurée au temps tn est inférieure à une valeur seuil Us prédéterminée et/ou lorsque la valeur de Pm est inférieure à une valeur de seuil prédéterminée, en prolongeant la charge totale Ah d'une durée déterminée d'égalisation Te.

15. Procédé selon la revendication 14 caractérisé en ce que l'on choisit Us de l'ordre de 2,4 V par élément de l'accumulateur.

16. Procédé selon la revendication 3 et l'une quelconque des revendications 1 à 15 caractérisé en ce que i = 1.

17. Procédé selon la revendication 12 et l'une quelconque des revendications 1 à 16 caractérisé en ce que r et s sont choisis de l'ordre de 50 %.

18. Dispositif pour charger un accumulateur selon un procédé selon l'une quelconque des revendications 1 à 17 comportant :
    - des moyens (30) pour fournir une tension de charge
    - des moyens (31) pour mesurer en permanence le courant de charge I, la tension U aux bornes de l'accumulateur et le temps de charge t
    - des moyens (32) pour mémoriser ces valeurs à intervalles de temps réguliers caractérisé en ce qu'il comporte en outre :
    - des moyens (33, 34, 35) de calcul programmés à microprocesseur pour détecter la valeur maximale absolue Pm de la pente de la courbe U(t) et pour calculer la charge totale Ah à appliquer en fonction de la valeur détectée Pm, et
    - des moyens (36) pour interrompre automatiquement la charge lorsque la charge totale Ah a été appliquée.

19. Dispositif selon la revendication 18 caractérisé en ce que les moyens (33, 34, 35) de calcul programmés à microprocesseur comportent des moyens de lissage numérique de la courbe U(t).

20. Dispositif selon l'une quelconque des revendications 18 et 19 caractérisé en ce qu'il comporte des moyens (37) de mémorisation et de saisie des coefficients et nombres nécessaires au calcul de la charge totale Ah -notamment des coefficients et nombres q, r, s, x, y, z, k1, k2, k3, k4 et k5-.

**Patentansprüche**

1. Verfahren zum Laden eines Akkumulators, bei dem man ständig den Ladestrom I, die Spannung U an den Klemmen des Akkumulators und die Ladezeit t mißt, ständig den Wert der Ableitung dU/dt der Funktion U(t) und den zur Zeit t schon angelegten Wert der Ladung Ah(t) bestimmt, diese Größen in permanenten Momentanwertspeichern speichert, dadurch gekennzeichnet, daß man den absoluten Höchstwert Pm der Neigung der Kurve ermittelt, welche den Wert der Spannung U in Abhängigkeit von der Zeit t darstellt, man die Gesamtladung Ah berechnet, die nach der Ermittlung und entsprechend dem ermittelten absoluten Höchstwert Pm der Neigung der Kurve U(t) an den Akkumulator angelegt werden soll, und man das Laden des Akkumulators einstellt, wenn die angelegte Ladung Ah(t) den in Abhängigkeit von dem erfaßten Pm-Wert berechneten Wert der Gesamtladung Ah erreicht.

2. Verfahren nach Anspruch 1, dadurch gekennzeichnet, daß man den absoluten Höchstwert Pm der Gesamtneigung der geglätteten Kurve ermittelt, welche den Wert der Spannung U in Abhängigkeit von der Zeit t nach Beseitigung der Störsignale relativer schwacher Amplitude und relativer Hochfrequenz darstellt.

3. Verfahren nach einem der Ansprüche 1 und 2, dadurch gekennzeichnet, daß man die Gesamtladung Ah ebenfalls in Abhängigkeit von dem bereits zu der Zeit ti angelegten Ladungswert Ah(ti) berechnet, wo die Gesamtneigung der Kurve, die U(t) darstellt, den Wert Pm/i annimmt, nachdem sie durch den Höchstwert Pm gegangen ist, wobei i eine willkürlich gewählte ganze Zahl ungleich Null ist.

4. Verfahren nach Anspruch 3, dadurch gekennzeichnet, daß man annähernd die Entladungstiefe PdD des Akkumulators bestimmt, mit der Formel :
$$PdD = q.Ah(ti) / C$$
wobei C die Nennkapazität des Akkumulators und q ein nach Erfahrung und/oder Art des Akkumulators willkürlich gewählter Koeffizient ist, und daß man zum Berechnen der Gesamtladung Ah eine Formel anwendet, die entsprechend dem so bestimmten PdD-Wert variiert.

5. Verfahren nach einem der Ansprüche 1 bis 4, dadurch gekennzeichnet, daß man nach dem Ermitteln eines Höchstwertes der Gesamtneigung der Kurve (U(t) diesen Wert als absoluten Höchstwert speichert, man den Momentanwert P der Gesamtneigung weiterhin überwacht, den gespeicherten Pm-Wert durch einen neuen ermittelten Wert ersetzt, wenn die Gesamtneigung P wieder über den gespeicherten Wert hinaus ansteigt, und man die anzulegende Gesamtladung Ah berechnet, wobei diese Berechnung nach der Ermittlung der Zeit tn erfolgt, wo die Gesamtneigung P der Kurve U(t) den Wert Pm/n annimmt, wobei n eine nach Erfahrung und/oder Art des Akkumulators willkürlich gewählte ganze Zahl ungleich Null ist, allerdings in der Weise, daß man sicher ist, daß der letzte gespeicherte Höchstwert der Gesamtneigung P tatsächlich dem absoluten Höchstwert Pm entspricht.

6. Verfahren nach einem der Ansprüche 1 bis 5, dadurch gekennzeichnet, daß man zur Beseitigung der Störsignale relativer schwacher Amplitude und relativer Hochfrequenz der U(t) eine digitale Glättung an den gemessenen Werten U(t) vornimmt, indem man für jeden Zeitpunkt t einen Durchschnittswert der Werte U(t) über einen auf t zentrierten Zeitraum δt ermittelt, dessen Wert über dem Zeitraum dieser Signale liegt.

7. Verfahren nach Anspruch 6, dadurch gekennzeichnet, daß der Glättungszeitraum Te kleiner oder gleich 20 min. ist.

8. Verfahren nach einem der Ansprüche 1 bis 7, dadurch gekennzeichet, daß man die Gesamtadung Ah berechnet, nach der Formel

$$Ah = K\,Aho$$

wobei Aho die zu der Zeit tn angelegte Ladung und K ein Koeffizient ist, der je nach dem Pm-Wert und dem Ah(ti)- oder PdD-Wert schwankt.

9. Verfahren nach Anspruch 8, dadurch gekennzeichnet, daß K treppenförmig entsprechend dem Pm-Wert bei konstantem Ah(ti) oder PdD schwankt.

10. Verfahren nach einem der Ansprüche 8 und 9, dadurch gekennzeichnet, daß K treppenförmig entsprechend dem Ah(ti)- oder PdG-Wert bei konstantem Pm schwankt.

11. Verfahren nach einem der Ansprüche 1 bis 10, dadurch gekennzeichnet, daß, wenn PdD kleiner als ein nach Erfahrung und/oder Art des Akkumulators willkürlich gewählter Wert r ist, man die Gesamtladung Ah bestimmt, nach der Formel

$$Ah = k1.Aho \qquad \text{wenn } Pm > x$$
$$Ah = k2.Aho \qquad \text{wenn } Pm \leqq x$$

wobei x, k1, k2 nach Erfahrung und/oder Art des Akkumulators willkürlich gewählte Werte sind.

12. Verfahren nach einem der Ansprüche 1 bis 11, dadurch gekennzeichnet, daß, wenn PdD über einem nach Erfahrung und/oder Art des Akkumulators willkürlich gewählten Wert s liegt oder gleich diesem ist, man die Gesamtladung bestimmt, nach der Formel:

$$Ah = k3.Aho \text{ wenn } Pm > y$$
$$Ah = k4.Aho \text{ wenn } z < Pm \leqq y$$
$$Ah = k5.Aho \text{ wenn } Pm \leqq z$$

wobei y, z, k3, k4, k5 nach Erfahrung und/oder Art des Akkumulators willkürlich gewählte Werte sind.

13. Verfahren nach den Ansprüchen 11 und 12, dadurch gekennzeichnet, daß r = s.

14. Verfahren nach einem der Ansprüche 1 bis 13, dadurch gekennzeichnet, daß man einen Ausgleichladezyklus durchführt, wenn der zu der Zeit tn gemessene Wert der Spannung U unter einem vorbestimmten Schwellenwert Us und/oder wenn der Pm- Wert unter einem vorbestimmten Schwellenwert liegt, indem man die Gesamtladung Ah um eine bestimmte Ausgleichdauer Te verlängert.

15. Verfahren nach Anspruch 14, dadurch gekennzeichnet, daß man Us in der Größenordnung von 2,4 V pro Akkuelement wählt.

16. Verfahren nach Anspruch 3 und einem der Ansprüche 1 bis 15, dadurch gekennzeichnet, daß i = 1.

17. Verfahren nach Anspruch 12 und einem der Ansprüche 1 bis 16, dadurch gekennzeichnet, daß r und s in der Größenordnung von 50 % gewählt werden.

18. Vorrichtung zum Laden eines Akkumulators gemäß einem Verfahren nach einem der Ansprüche 1 bis 17, umfassend
   - Mittel (30) zum Liefern einer Ladespannung
   - Mittel (31) zur ständigen Messung des Ladestroms I, der Spannung U an den Klemmen des Akkumulators und der Ladezeit t
   - Mittel (32) zum Speichern dieser Werte in regelmäßigen Zeitabständen,
     dadurch gekennzeichnet, daß sie außerdem umfaßt:
   - mit Mikroprozessor programmierte Berechnungsmittel (33, 34, 35) zum Ermitteln des absoluten Höchstwertes Pm der Neigung der Kurve U(t) und zum Berechnen der anzulegenden Gesamtladung Ah in Abhängigkeit von dem ermittelten Wert Pm, und
   - Mittel (36) zum automatischen Unterbrechen des Ladevorgangs, wenn die Gesamtladung Ah angelegt wurde.

19. Vorrichtung nach Anspruch 18, dadurch gekennzeichnet, daß die mit Mikroprozessor programmierten Berechnungsmittel (33, 34, 35) Mittel zum digitalen Glätten der Kurve U(t) aufweisen.

20. Vorrichtung nach einem der Ansprüche 18 und 19, dadurch gekennzeichnet, daß sie Mittel (37) zum Speichern und Erfassen der für die Berechnung der Gesamtladung Ah notwendigen Koeffizienten und Zahlen - insbesondere der Koeffizienten und Zahlen q, r, s, x, y, z, k1, k2, k3, k4 und k5 - aufweist.

## Claims

1. A process for charging a storage battery wherein the charging current I, the storage battery's voltage U and the charging time t are constantly measured, the value of the derivative dU/dt of the function U(t) and the value of the charge Ah(t) already applied at time t are constantly determined, and these values are stored in means for permanently storing instantaneous values, characterised in that the maximum absolute value Pm of the slope of the curve representing the value of the voltage U according to the time t is detected, the total charge Ah which must be applied to the storage battery after the detection is calculated according to the maximum absolute value Pm detected for the slope of the curve U(t), and the charging of the storage battery is stopped when the applied charge Ah(t) reaches the value of the total charge Ah calculated according to the detected value Pm.

2. A process according to claim 1, characterised in that the maximum absolute value Pm of the overall slope of the smoothed curve representing the value of the voltage U according to the time t is detected following the suppression of interference signals with a low relative amplitude and a high relative frequency.

3. A process according to any of claims 1 and 2, characterised in that the total charge Ah is also calculated according to the value of the charge Ah(ti) already applied at the time ti when the overall slope of the curve representing U(t) takes on the value Pm/i after having reached the maximum value Pm, where i is a non-zero integer arbitrarily chosen.

4. A process according to claim 3 characterised in that the depth of discharge PdD of the storage battery is approximately determined using the formula

$$PdD = q.Ah(ti)/C$$

where C is the nominal capacity of the storage battery and q is a coefficient arbitrarily chosen according to previous experience and/or the type of storage battery, and in that, in order to calculate the total charge Ah, a formula is used which varies according to the value thus determined for PdD.

5. A process according to any of claims 1 to 4, characterised in that once a maximum value has been determined for the overall slope of the curve U(t), this value is recorded as the maximum absolute value Pm, the monitoring of the instantaneous value P of the overall slope is continued, the value stored for Pm is replaced by a new detected value if the overall slope P increases once again beyond the stored value, and the total charge Ah to be applied is calculated, this calculation being carried out after the detection of the time tn when the overall slope P of the curve U(t) takes on the value Pm/n, n being a non-zero integer arbitrarily chosen according to previous experience and/or the type of storage battery in such a way that it is certain that the last maximum value stored for the overall slope P effectively corresponds to the maximum absolute value Pm.

6. A process according to any of claims 1 to 5, characterised in that, to suppress the low relative amplitude and a high relative frequency interference signals from U(t), a digital smoothing of the measured values of U(t) is carried out by calculating, for each instant t, an average of the values of U(t) over a period $\delta t$ centred around t and whose value exceeds the period of these signals.

7. A process according to claim 6 characterised in that the smoothing period Te is less than or equal to 20 minutes.

8. A process according to any of claims 1 to 7, characterised in that the total charge Ah is calculated according to a formula:

$$Ah = K\,Aho$$

where Aho is the charge applied at the time tn and K is a coefficient which varies according to the value of Pm and that of Ah(ti) or PdD.

9. A process according to claim 8, characterised in that K varies in steps according to the value of Pm, with Ah(ti) or PdD remaining constant.

10. A process according to any of claims 8 and 9, characterised in that K varies in steps according to the value of Ah(ti) or PdD, with Pm remaining constant.

11. A process according to any of claims 1 to 10, characterised in that if PdD is less than a value r arbitrarily chosen according to previous experience and/or the type of storage battery, the total charge Ah is determined according to the formula:

$$Ah = k1.Aho \qquad if\ Pm > x$$
$$Ah = k2.Aho \qquad if\ Pm < x$$

where x, k1, k2 are values arbitrarily chosen according to previous experience and/or the type of storage battery.

12. A process according to any of claims 1 to 11, characterised in that if PdD is greater than or equal to a value s arbitrarily chosen according to previous experience and/or the type of storage battery, the total charge Ah is determined according to the formula:

$$Ah = k3.Aho \qquad if\ Pm > y$$

$$Ah = k4.Aho \qquad \text{if } z < Pm < y$$
$$Ah = k5.Aho \qquad \text{if } Pm < z$$

where y, z, k3, k4, k5 are values arbitrarily chosen according to previous experience and/or the type of storage battery.

13. A process according to claims 11 and 12 characterised in that r = s.

14. A process according to any of claims 1 to 13, characterised in that an equalising charge cycle is carried out when the value of the voltage U measured at the time tn is less than a predetermined threshold value Us and/or when the value of Pm is less than a predetermined threshold value, by extending the total charge Ah by a determined equalising time Te.

15. A process according to claim 14, characterised in that Us is chosen in the order of 2.4V per element of the storage battery.

16. A process according to claim 3 and any of claims 1 to 15, characterised in that i = 1.

17. A process according to claim 12 and any of claims 1 to 16, characterised in that r and s are chosen in the order of 50%.

18. A device for charging a storage battery by means of a process according to any of claims 1 to 17, comprising:
    - means (30) for delivering a charging voltage
    - means (31) for constantly measuring the charging current I, the voltage U of the storage battery and the charging time t
    - means (32) for storing these values at regular time intervals
      characterised in that if further comprises:
    - means (33, 34, 35) for performing programmed calculations by means of a microprocessor, for detecting the maximum absolute value Pm of the slope of the curve U(t), and for calculating the total charge Ah to be applied according to the detected value Pm, and
    - means (36) to automatically stop the charging once the total charge Ah has been applied.

19. A device according to claim 18, characterised in that the means (33, 34, 35) for performing programmed calculations by means of a microprocessor comprise means for digitally smoothing the curve U(t).

20. A device according to any of claims 18 and 19, characterised in that it comprises means (37) for storing and entering coefficients and numbers which are necessary to calculate the total charge Ah - especially the coefficients and numbers q, r, s, x, y, z, k1, k2, k3, k4 and k5.

FIG.1

FIG.5

+ neuve
• bon état
▲ vieille
o très vieille

FIG.2

+ neuve
• bon état
▲ très vieille

FIG.3

FIG.4

FIG.6

REMISES A ZERO    4

```
.mesures instantanées de u,I,t
.mémorisation de u, I ,t
.lissage numérique de u(t)          3
.calcul de du/dt et Ah(t)
.mémorisation de du/dt et de Ah(t)
```

**5**

oui    $P(t-2) < P(t-1)$ et $P(t) < P(t-1)?$    non

```
mémorisation de
Pm =P(t -1) et    6
de t - 1
```

**39**

oui    $P(t-1)=Pm/i$ ?    non

```
mémorisation de
t-1= ti          40
de Ah (ti)
```

**8**

oui    $P(t) > Pm$ ?    non

**10**

oui    $P(t) \leq Pm/n$ ?    non

```
memorisation de
tn = t            11
de u(tn)
```

FIG.7

9 — CALCUL DE Ah

lecture de $Ahi = \int_0^{ti} I(t) \cdot t \, dt$ —13

calcul de PdD —14

15

oui — PdD < 50%? — non

16

oui — Pm > x? — non

oui — Pm > y? — non

19

21

Pm > z?

17

18

20

22

23

$Ah = k_1 Ah_0$

$Ah = k_2 Ah_0$

$Ah = k_3 Ah_0$

$Ah = k_4 Ah_0$

$Ah = k_5 Ah_0$

9

24

lecture de $Ah(t) = \int_0^t I(t) \, dt$

mesure et mémorisation
u, I ,t, du/dV, Ah(t)
lissage numérique

3

oui — Ah(t) ≥ Ah? — non

25

oui — U(tn) > Us? — non

26

FIN
DE
CHARGE —27

EGALISATION
PENDANT Te —28

FIG.8

FIN DE
CHARGE —27

FIG.9